# EUROPÄISCHE PATENTSCHRIFT

(11) **EP 2 623 313 B1**
(45) Veröffentlichungstag und Bekanntmachung des Hinweises auf die Patenterteilung: **21.01.2015**
(21) Anmeldenummer: 13153030.5
(22) Anmeldetag: 29.01.2013
(51) Int. Cl.: B32B 15/14, F16P 1/00

(54) **Laserschutzvorrichtung mit mindestens zwei Gewebelagen**
Laser protection device with at least two textile layers
Dispositif de protection laser avec au moins deux couches de tissu

(30) Priorität: 03.02.2012 DE 102012201627
(43) Veröffentlichungstag der Anmeldung: 07.08.2013
(73) Patentinhaber: Laservision GmbH & Co. KG, 90766 Fürth (DE)
(72) Erfinder: Bura, Peter, 73773 Aichwald (DE); Fröhlich, Dr. Thomas, 91207 Lauf an der Pegnitz (DE); Frieb, Tim, 96052 Bamberg (DE)
(74) Vertreter: Rau, Schneck & Hübner Patentanwälte Rechtsanwälte PartGmbB

(56) Entgegenhaltungen:
- US-A- 3 720 836

## Beschreibung

Die Erfindung betrifft eine Laserschutzvorrichtung in Form eines flexiblen Flächengebildes mit mindestens zwei Gewebelagen.

Derartige Laserschutzvorrichtungen sind beispielsweise in Form von Laserschutzvorhängen bekannt, welche insbesondere bei hohen Schutzanforderungen stets einen Aufbau mit einer Metallfolie oder Metallbeschichtung umfassen. Bei dem Metall kann es sich beispielsweise um Aluminium handeln.

Eine Laserschutzvorrichtung mit einer Aluminiumfolienlage ist beispielsweise aus der EP 2 011 637 B1 bekannt. Neben der Aluminiumfolienlage ist wenigstens eine weitere Lage aus Silikatfaser-Glasgewebe vorgesehen.

Eine ähnliche Laserschutzvorrichtung wird in der DE 20 2006 006 823 U1 beschrieben. Diese Laserschutzvorrichtung hat einen Aufbau mit einer Glasfasergewebe-Lage, auf die formschlüssig eine Lage aus einem hoch reflektierenden Folienwerkstoff, beispielsweise aus Metall und insbesondere aus Aluminium, aufkaschiert ist. Die Folienwerkstoff-Lage ist außerdem mit einer Beschichtung aus einem oxid-keramischen Werkstoff oder aus Kupfer und/oder Aluminium versehen.

Aus der DE 41 13 668 C2 ist eine weitere Laserschutzvorrichtung mit einem mehrlagigen Aufbau bekannt. Der Aufbau umfasst eine erste Gewebelage aus einem nicht brennbaren elastischen Trägermaterial aus Meta-Aramid-Fasern, eine erste Aluminium-Folienlage, eine erste Kohlenstoff-Faser-Vlieslage, eine zweite Aluminium-Folienlage, eine zweite Kohlenstoff-Faser-Vlieslage, eine dritte Aluminium-Folienlage, eine dritte Kohlenstoff Faser-Vlieslage und eine zweite Gewebelage aus einem Gemisch aus pre-oxidierten Fasern und Para-Aramid-Faser. Die Lagen sind an ihren Außenrändern miteinander vernäht und liegen ansonsten ohne zusätzliche Verbindung flächig aneinander an.

Weiterhin wird in der EP 0 247 797 A2 ein Laserschutzschild beschrieben, das mindestens eine Vlieslage umfasst, auf die eine Metallschicht aufgeklebt ist. Die Metallschicht besteht insbesondere wiederum aus einer Aluminiumfolie.

Bei allen diesen bekannten Laserschutzvorrichtungen kommt derzeit also eine Metallfolie oder -beschichtung zum Einsatz. Eine derartige Metallfolie kann aber reißen, insbesondere wenn sie sehr dünn ausgeführt ist. An der Rissstelle kann es dann zu einer verringerten Laserschutzwirkung kommen. Wenn dagegen die Metallfolie dicker ausgeführt ist, kann sie eine nur unzureichende Flexibilität aufweisen. Letzteres ist insbesondere dann unerwünscht, wenn die Laserschutzvorrichtung textilen Charakter haben soll.

In der US 3,720,836 wird eine Laserschutzvorrichtung umfassend ein gewebeartiges Abschirmmaterial aus übereinander gestapelten flexiblen Graphitfolien beschrieben, wobei die flexiblen Graphitfolien aus bindemittellos verpresstem expandierten Graphit bestehen. Gemäß einer Ausgestaltung können diese Graphitfolien auch durch eingebettete Graphitgewebe verstärkt sein.

Die Aufgabe der Erfindung besteht deshalb darin, eine Laserschutzvorrichtung der eingangs bezeichneten Art anzugeben, die einerseits eine hohe Laserschutzwirkung aufweist und andererseits die bei bekannten Laserschutzvorrichtungen im Zusammenhang mit der eingesetzten Metallfolie auftretenden Nachteile vermeidet.

Zur Lösung dieser Aufgabe wird eine Laserschutzvorrichtung entsprechend den Merkmalen des Patentanspruchs 1 angegeben. Bei dieser Laserschutzvorrichtung handelt es sich um eine solche, bei der die Gewebelagen unmittelbar aufeinander gestapelt angeordnet sind und einen Gewebe-Mehrlagenaufbau bilden, benachbarte Gewebelagen nur bereichsweise an Verbindungsstellen miteinander verbunden sind, so dass die benachbarten Gewebelagen abseits der Verbindungsstellen lose aneinander liegen und zwischen den benachbarten Gewebelagen zumindest bereichsweise Luftpolster vorgesehen sind, die Gewebelagen aus einem nicht brennbaren Gewebematerial mit einer Anwendungstemperatur von bis zu 1200°C und mit einer Zersetzungstemperatur von über 1600°C bestehen, und das Gewebematerial Silikat, Siliziumcarbid oder Asbest ist.

Die erfindungsgemäße Laserschutzvorrichtung ist also insbesondere metallfrei ausgebildet. Die Gewebelagen liegen vorzugsweise unmittelbar, insbesondere auch zwischenbeschichtungsfrei aneinander an. Es wurde erkannt, dass zur Erzielung einer hohen Laserschutzfunktion anders als bei den bekannten Laserschutzvorrichtungen üblich keine Metallfolie oder -beschichtung, insbesondere keine Aluminiumfolie, erforderlich ist. Die Gewebelagen haften nicht flächig, sondern nur bereichsweise aneinander. Insbesondere sind sie zueinander verschiebbar und liegen nur locker aneinander an. Zwischen ihnen sind Luftpolster vorhanden, die bei einer Laserbelastung der Laserschutzvorrichtung wesentlich dazu beitragen, Wärmeenergie mittels Konvektion und Wärmestrahlung seitlich abzuführen und damit zur thermischen Entlastung des durch den Laserstrahl getroffenen Bereichs beitragen. Dagegen wird eine Wärmeleitung in Richtung der Oberflächennormalen des flexiblen Flächengebildes weitgehend unterdrückt. Aufgrund der Luftpolster zwischen den benachbarten Gewebelagen stellt sich in dem Zwischenraum zwischen zwei benachbarten Gewebelagen insbesondere auch eine gewisse Luftströmung ein, die zur Kühlung des von einem Laserstrahl getroffenen Bereichs beiträgt. Aufgrund der hohen Hitzebeständigkeit des Gewebematerials widersteht der Gewebe-Mehrlagenaufbau der Laserstrahlung. Die Gewebelage kann zwar an der von einem Laserstrahl getroffenen Stelle thermisch stark erhitzt und insbesondere sogar zum Glühen gebracht werden. Trotzdem bleibt die Struktur der Gewebelagen erhalten. Die Gewebelagen sind für Anwendungen mit Einsatztemperaturen von bis zu 1200°C bestimmt. Zu einer Zersetzung der Gewebelagen kommt es erst bei noch höheren Temperaturen von über 1600°C.

Der Gewebe-Mehrlagenaufbau aus mehreren Gewebelagen hat überraschenderweise eine höhere Laserschutzfestigkeit als eine Einzellage aus dem gleichen Gewebematerial mit einer Dicke entsprechend derjenigen des gesamten Gewebe-Mehrlagenaufbaus. Diese höhere Laserschutzfestigkeit ist auf die bereits erwähnten vorteilhaften Luftpolster zwischen den benachbarten Gewebelagen zurückzuführen.

Vorteilhafterweise kann diese Schutzfunktion der Laserschutzvorrichtung über einen sehr weiten Wellenlängenbereich erreicht werden, so dass verschiedene Anwendungsfälle mit unterschiedlicher Laserstrahlung mit einer einzigen Laserschutzvorrichtung gleichermaßen abgedeckt werden können. Die Schutzfunktion kann insbesondere von Wellenlängen im ultravioletten Bereich bis hin zu Wellenlängen im infraroten Bereich gegeben sein.

Ein weiterer Vorteil der Laserschutzvorrichtung besteht in dem geringeren Gewicht, das sich unter anderem auch aufgrund des Verzichts auf einen Metallwerkstoff ergibt. Die vorteilhafte Metallfreiheit bedingt außerdem eine verbesserte Flexibilität und auch eine bessere textile Anmutung der Laserschutzvorrichtung, was insbesondere dann günstig ist, wenn es sich bei der Laserschutzvorrichtung um einen Vorhang oder ein ähnliches Stoffgebilde handelt.

Metallfrei sind hier zum einen solche Laserschutzvorrichtungen zu verstehen, deren flexibles Flächengebilde tatsächlich absolut metallfrei ist und insbesondere keine flächig zusammenhängende Metalllage, wie z.B. ein Metallblech, eine Metallfolie oder eine Metallbeschichtung, umfasst. Zum anderen sollen hier insbesondere aber auch solche Laserschutzvorrichtungen als metallfrei verstanden werden, die eine (Deck-)Lage umfassen, der Metallbestandteile, beispielsweise in Form von Metallpartikeln, in untergeordnetem Mengenverhältnis von bis zu maximal 5 Gewichtsprozenten bezogen auf die betreffende Lage zugemischt sind. Einer derartigen Lage fehlt dann das typische Verhalten von Metallblechen, Metallfolien oder Metallbeschichtungen. So ist keine flächig zusammenhängende Metallisierung mit einer durchgehenden Metallgefügestruktur gegeben. Vielmehr können die einzelnen Metallbestandteile insbesondere voneinander unabhängig in eine Basissubstanz der betreffenden Lage eingebettet sein. Dementsprechend liegen auch kein metallisch reflektierendes Verhalten sowie keine vergleichbare Wärmeleitfähigkeit wie bei Metallblechen, Metallfolien oder Metallbeschichtungen vor. Deshalb werden solche Ausgestaltungen hier ebenfalls als metallfrei bezeichnet.

Das Gewebematerial ist Silikat, Siliziumcarbid, oder Asbest oder enthält insbesondere Silikat, Siliziumcarbid oder Asbest. Die genannten Gewebematerialien haben eine herausragende Hitzebeständigkeit. Sie eignen sich daher sehr gut für einen Einsatz bei der Laserschutzvorrichtung. Bei dem verwendeten Silikat handelt es sich insbesondere um ein ausgelaugtes Material mit einem SiO₂-Gehalt von etwa bis zu 98 %. Es kann aber z.B. noch Restanteile an Calzium-, Bor-, Magnesium-, Kalium-, Titan- und/oder Eisenoxid sowie an Natrium aufweisen.

Vorteilhafte Ausgestaltungen der Laserschutzvorrichtung ergeben sich aus den Merkmalen der von Anspruch 1 abhängigen Ansprüche.

Günstig ist eine Ausgestaltung, bei der das Gewebematerial faserförmig ist.

Gemäß einer weiteren günstigen Ausgestaltung ist das Gewebematerial insbesondere zumindest teilweise mit Silikatfasern realisiert, die mit Glimmer ausgerüstet sind. Insbesondere enthält zumindest eine der Gewebelagen des Gewebe-Mehrlagenaufbaus einen Glimmer-Anteil. Durch die Zusetzung von Glimmer lässt sich die Sprödigkeit der Silikatfasern, die z.B. beim Auslaugen der Fasern zur Erzielung eines höheren SiO₂-Gehalts entstehen kann, wieder reduzieren.

Gemäß einer weiteren günstigen Ausgestaltung bestehen die Gewebelagen jeweils aus dem gleichen Gewebematerial. Dies ist günstig, da dann der-Gewebe-Mehrlagenaufbau symmetrisch ist. Es gibt keine Vorzugsrichtung hinsichtlich des Einbaus der Laserschutzvorrichtung. Bei der Montage muss dann also nicht darauf geachtet werden, welche Seite der Laserschutzvorrichtung der Laserstrahlung zugewandt ist. Montagefehler können so vermieden werden. Grundsätzlich können die Gewebelagen aber auch unterschiedlich aufgebaut sein. Beispielsweise können sich die Gewebelagen in der Gewebevariante und/oder im Gewebegewicht voneinander unterscheiden. Günstig ist eine Ausgestaltung, bei der alle Gewebelagen ein Flächengewicht von jeweils etwa 800 g/m² haben. Dadurch resultiert eine Laserschutzvorrichtung, insbesondere ein Laserschutzvorhang, mit einem vergleichsweise niedrigen Gewicht. Grundsätzlich kann auch ein höheres Flächengewicht verwendet werden, was aber aus Gründen der Laserfestigkeit nicht unbedingt erforderlich ist. Allerdings erhöht sich dann auch das Gesamtgewicht der Laserschutzvorrichtung, so dass die vorstehend genannte Ausgestaltung mit dem niedrigen Flächengewicht bevorzugt ist, insbesondere da sie den Anforderungen an die Laserfestigkeit ohne weiteres gerecht wird.

Gemäß einer weiteren günstigen Ausgestaltung sind genau drei Gewebelagen vorgesehen. Mit drei Gewebelagen, die insbesondere aus einem Silikatfaser-Material hergestellt sind, lässt sich für einen Laser-Wellenlängenbereich zwischen 1050 nm und 1400 nm eine Schutzstufe D AB6 gemäß der europäischen Norm EN 12254 erreichen.

Gemäß einer weiteren günstigen Ausgestaltung sind die Verbindungsstellen punkt- oder linienförmig ausgebildet. Dadurch wird sichergestellt, dass die Gewebelagen in den übrigen Bereichen lose aneinander liegen und sich im Zwischenbereich zwischen benachbarten Gewebelagen die aus thermischen Gründen günstigen Luftpolster bevorzugt ausbilden.

Gemäß einer weiteren günstigen Ausgestaltung sind die Verbindungsstellen als Nahtlinien ausgebildet, die insbesondere an den seitlichen Rändern des Flächengebildes verlaufen. Bei genähten Verbindungsstellen gibt es keinen direkten thermischen Kontakt zwischen den aneinander liegenden Gewebelagen. Vielmehr kann der Kontakt stets nur indirekt über das Nahtmaterial erfolgen. Dies ist günstig hinsichtlich der in Richtung der Oberflächennormalen des Flächengebildes unerwünschten und in der senkrecht dazu orientierten Richtung erwünschten Wärmeleitung. Erfolgt das Vernähen nur an den Außenrändern des Flächengebildes, sind die Gewebelagen zum einen gut aneinander fixiert, zum anderen bleibt ein sehr großer unvernähter Restbereich, in dem die Gewebelagen lose aneinander liegen und sich die Luftpolster im Zwischenraum zwischen benachbarten Gewebelagen ausbilden können.

Gemäß einer weiteren günstigen Ausgestaltung ist zur Bildung der Nahtlinien ein nicht brennbarer Faden vorgesehen. Insbesondere weist der Faden eine gleich oder zumindest ähnlich hohe Anwendungs- und Zersetzungstemperatur auf wie die Gewebelagen. Vorzugsweise besteht der Faden aus dem gleichen Material wie die Gewebelagen oder ist zumindest mit diesem Gewebematerial hergestellt. Dadurch sind auch die Verbindungsstellen besonders hitzebeständig und vorzugsweise brandfest ausgebildet. Somit kann es auch an den Verbindungsstellen bei großer Hitzeentwicklung nicht zu einer Entzündung der Laserschutzvorrichtung und/oder zu einer Zerstörung deren Struktur kommen.

Gemäß einer weiteren günstigen Ausgestaltung ist der Gewebe-Mehrlagenaufbau auf zumindest einer Außenseite mit einer optischen Filterschicht in Form einer lichtabsorbierenden Decklage versehen. Insbesondere ist die Decklage als Beschichtung ausgeführt. Die lichtabsorbierende Filterwirkung der Decklage ist vorzugsweise zumindest im maßgeblichen Wellenlängenbereich der Laserstrahlung, für die die Laserschutzvorrichtung ausgelegt ist, gegeben. Die lichtabsorbierende Wirkung kann aber auch über einen größeren Wellenlängenbereich vorhanden sein. Die Decklage ermöglicht die Realisierung einer noch höheren Laserschutzstufe. Insbesondere lässt sich so für den Gesamtaufbau der Laserschutzvorrichtung eine Lichtresttransmission von ≤ 10⁻⁸. Eine so niedrige Lichtresttransmission kann auch als "lichtundurchlässig" bezeichnet werden. Damit wird eine solche Laserschutzvorrichtung den höchsten Schutzanforderungen gerecht. Der Gewebe-Mehrlagenaufbau und die Decklage haben eine unterschiedliche Wirkungsweise und technische Funktion. Während der Gewebe-Mehrlagenaufbau in erster Linie dazu dient, beim Auftreffen eines Laserstrahls das Laserlicht zu streuen und (thermische) Energie mittels Konvektion und Wärmestrahlung abzubauen und/oder abzuführen, besteht die Hauptfunktion der Decklage darin, das gestreute Rest-Laserlicht zu absorbieren. Insofern ist es vorteilhaft, wenn bei einer nur einseitig mit einer Decklage versehenen Laserschutzvorrichtung diese Decklage auf der Außenseite, also auf der im Einsatzfall von der Laserstrahlung bzw. der Laserquelle abgewandten Seite, angeordnet ist. Dann trifft in einem Fehlerfall die Laserstrahlung zunächst auf die Gewebelagen, wo die Lichtstreuung und der Energieabbau erfolgen. Erst das energieärmere gestreute Rest-Laserlicht trifft auf die auf der abgewandten Außenseite angeordnete Decklage, von der es absorbiert wird.

Gemäß einer weiteren günstigen Ausgestaltung ist die Decklage auf jeder der beiden Außenseiten des Gewebe-Mehrlagenaufbaus vorgesehen. Die Laserschutzvorrichtung hat dann wiederum einen symmetrischen Gesamtaufbau, so dass es bei der Montage nicht auf die Orientierung ankommt. Fehlmontagen können so ausgeschlossen werden. Außerdem bietet eine zusätzliche Decklage auch auf der der Laserquelle zugewandten Innenseite eine zusätzliche Sicherheit. So kann die Schutzfunktion für den Fall, dass eine der Decklagen beispielsweise an einer Stelle beschädigt ist, von der anderen Decklage übernommen werden. Es ist also eine Sicherheitsredundanz gegeben.

Gemäß einer weiteren günstigen Ausgestaltung besteht die Decklage aus einem Decklagenmaterial auf Basis eines Kunststoffs, insbesondere eines Polyurethans. Die Laserschutzvorrichtung bietet dann auch Schutz vor Staubemissionen. Außerdem weist sie dann eine homogene, abwischbare Oberfläche auf, und sie ist vorzugsweise auch desinfizierbar.

Gemäß einer weiteren günstigen Ausgestaltung besteht die Decklage aus einem Decklagenmaterial, dem Pigmente, insbesondere Ruß-Pigmente, zugemischt sind. Die Pigmente tragen zusätzlich zur Lichtabsorption bei, also dazu, dass die Laserschutzvorrichtung vorzugsweise lichtdicht ist. Eine Lichttransmission durch die Laserschutzvorrichtung wird insbesondere weitest gehend verhindert. Dies gilt zum einen für den Wellenlängenbereich der Laserstrahlung, zum anderen aber auch für Lichtstrahlung aus einem anderen, beispielsweise dem sichtbaren, Wellenlängenbereich. Die Schutzfunktion der Laserschutzvorrichtung kann so weiter verbessert und insbesondere über einen sehr weiten Wellenlängenbereich ausgedehnt werden. Eine auch im sichtbaren Wellenlängenbereich lichtdichte Ausgestaltung der Laserschutzvorrichtung ist beispielsweise bei solchen Anwendungen von Vorteil, bei denen es auch auf die Abschirmung und Abschattung von störendem Umgebungslicht ankommt. Die Laserschutzvorrichtung hält dann von außen einfallendes Umgebungslicht von dem mittels der Laserschutzvorrichtung umschlossenen Bereich, in dem sich die Laseranwendung befindet, ab. Insofern findet also auch eine Abschirmung in umgekehrter Richtung statt. Darüber hinaus tritt bei manchen Laseranwendungen, wie beispielsweise dem Laser-Schweißen oder dem Laser-Schneiden, sehr energiereiche sichtbare Sekundärstrahlung auf. Obwohl diese Sekundärstrahlung nicht so gefährlich ist wie die eigentliche Laserstrahlung, ist es dennoch günstig, wenn auch sie abgeschirmt wird und nicht in einen Bereich außerhalb des von der Laserschutzvorrichtung umschlossenen Bereichs gelangt.

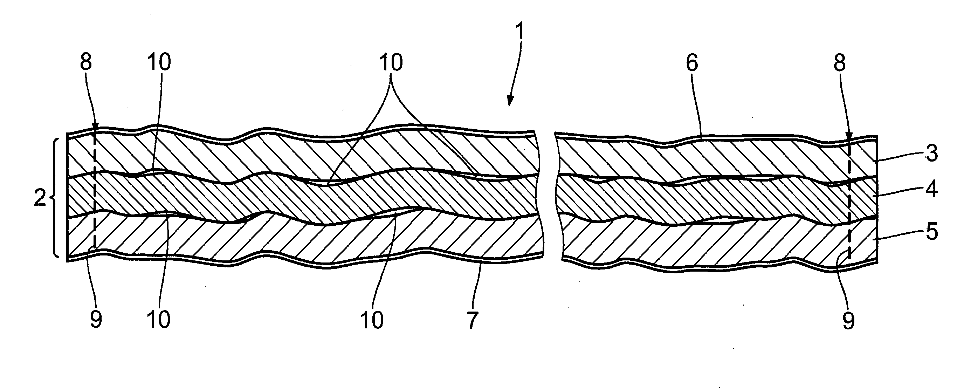

Weitere Merkmale, Vorteile und Einzelheiten der Erfindung ergeben sich aus der nachfolgenden Beschreibung eines Ausführungsbeispiels anhand der Zeichnung. Die einzige Figur zeigt ein Ausführungsbeispiel einer Laserschutzvorrichtung mit drei lose aneinander liegenden Silikat-Gewebelagen und mit Außenseitenbeschichtungen in Form von Polyurethan-Decklagen.

Auch Einzelheiten des im Folgenden näher erläuterten Ausführungsbeispiels können für sich genommen eine Erfindung darstellen oder Teil eines Erfindungsgegenstands sein.

In der Figur ist ein Ausführungsbeispiel einer Laserschutzvorrichtung 1 in Form eines Laserschutzvorhangs gezeigt. Die Laserschutzvorrichtung 1 ist ein flexibles Flächengebilde mit einem Gewebe-Mehrlagenaufbau 2 mit insgesamt drei Gewebelagen 3, 4 und 5. Die Gewebelagen 3 bis 5 sind unmittelbar, also insbesondere ohne Zwischenschichten, aufeinander gestapelt. Sie bestehen jeweils aus einem nicht brennbaren Gewebematerial, das aus faserförmigem Silikat hergestellt ist. Dessen SiO₂-Anteil liegt beim gezeigten Ausführungsbeispiel bei über 90 %. Dieser hohe Anteil ist mittels eines Auslaugprozesses hergestellt worden. Die Gewebelagen 3 bis 5 sind gleich ausgestaltet. Dies gilt insbesondere sowohl für das Gewebematerial, als auch für die Gewebevariante, als auch für die Lagendicke, als auch für das Flächengewicht. Letzteres liegt bei dem Ausführungsbeispiel jeweils bei 800 g/m². Das für die Gewebelagen 3 bis 5 verwendete Silikat-Gewebematerial hat eine hohe Anwendungstemperatur von bis zu 1200°C und eine Zersetzungstemperatur von über 1600°C.

An seinen beiden Außenseiten ist der Gewebe-Mehrlagenaufbau 2 jeweils mit einer Decklage 6 bzw. 7 versehen. Die Decklagen 6, 7 sind jeweils als Kunststoffbeschichtungen der beiden außenliegenden Decklagen 3 bzw. 5 realisiert. Der für die Decklagen 6, 7 verwendete Kunststoff ist ein Polyurethan (PU), der auch Ruß-Pigmente enthält.

An den seitlichen Außenrändern sind die Gewebelagen 3 bis 5 inklusive der beiden Decklagen 6, 7 längs Nahtlinien 8 miteinander vernäht. Ein zur Herstellung der Nahtlinien 8 verwendeter Faden 9, der in der Darstellung der Figur durch gestrichelte Linienführung angedeutet ist, besteht aus dem gleichen nicht brennbaren Gewebematerial wie die Gewebelagen 3 bis 5. Die Nahtlinien 8 bilden im Wesentlichen die einzigen Stellen, an denen die Gewebelagen 3 bis 5 dauerhaft unmittelbar aneinander anliegen und aneinander fixiert sind. Außerhalb der Nahtlinien 8 liegen die Gewebelagen 3 bis 5 nur lose aneinander, so dass zwischen benachbarten Gewebelagen 3 und 4 einerseits sowie 4 und 5 andererseits Luftpolster 10 vorhanden sind. Diese Luftpolster 10 tragen beim Auftreffen von Laserstrahlung auf die Laserschutzvorrichtung 1 maßgeblich dazu bei, dass die sich entwickelnde thermische Energie abgebaut und insbesondere seitlich abgeführt wird.

Die in der Figur gezeigte Laserschutzvorrichtung 1 hat eine sehr hohe Schutzwirkung gegenüber Laserstrahlung. Dies gilt insbesondere für einen sehr weiten Wellenlängenbereich. Anhand von Messungen wurde nachgewiesen, dass die Laserschutzvorrichtung 1 mindestens die im Folgenden aufgeführten Schutzstufen gemäß der Norm DIN EN 12254 aufweist:
- im Wellenlängenbereich 180 nm bis 315 nm Schutzstufen D AB8 und IR AB3,
- im Wellenlängenbereich > 315 nm bis 1050 nm Schutzstufe D AB7,
- im Wellenlängenbereich > 315 nm bis 1400 nm Schutzstufen 1 AB8 + R AB7 + M AB8,
- im Wellenlängenbereich > 1050 nm bis 1400 nm Schutzstufe D AB6, und
- im Wellenlängenbereich > 1400 nm bis 11000 nm Schutzstufe DI AB3.

Bei diesen Messungen ist die in der DIN EN 12254 beschriebene Testprozedur zum Einsatz gekommen. Demnach wurden eine Prüfung bei Dauerstrich-Laserbestrahlung über einen Zeitraum von mindestens 100 s und eine Prüfung bei gepulster Laserstrahlung mit mindestens 1000 Pulsen über einen Zeitraum von mindestens 100 s durchgeführt, wobei unterschiedliche Strahlquellen für verschiedene Pulsdauern und Wellenlängen zum Einsatz kamen.

Die genannten hohen Schutzstufen werden insbesondere durch den in der Figur gezeigten metallfreien Aufbau der Laserschutzvorrichtung 1 erreicht. Die Laserschutzvorrichtung 1 wird also höchsten Schutzanforderungen gerecht, ohne dass dabei eine Lage oder eine Beschichtung aus einem Metall vorgesehen ist. Dadurch erhöht sich zugleich die textile Anmutung der Laserschutzvorrichtung 1. Außerdem wird auf diese Weise ein sehr niedriges Gesamtgewicht der Laserschutzvorrichtung 1 realisiert.

Bei den in der Figur gezeigten Ausführungsbeispielen ist die Laserschutzvorrichtung 1 als Vorhang ausgeführt. Andere Anwendungen für den vorteilhaften Gewebe-Mehrlagenaufbau 2, insbesondere auch mit einer anderen Anzahl an Gewebelagen, sowie mit den beiden außenseitigen Decklagen 6, 7, oder nur einer der beiden außenseitigen Decklagen 6, 7, oder ohne jegliche Decklage sind ebenfalls möglich. In jedem Fall lässt sich aber eine ausgezeichnete Schutzfunktion vor Laserstrahlung erreichen.

## Patentansprüche

1. Laserschutzvorrichtung in Form eines flexiblen Flächengebildes mit mindestens zwei Gewebelagen (3, 4, 5), wobei
a) die Gewebelagen (3, 4, 5) unmittelbar aufeinander gestapelt angeordnet sind und einen Gewebe-Mehrlagenaufbau (2) bilden,
b) benachbarte Gewebelagen (3, 4, 5) nur bereichsweise an Verbindungsstellen (8) miteinander verbunden sind, so dass die benachbarten Gewebelagen (3, 4, 5) abseits der Verbindungsstellen (8) lose aneinander liegen und zwischen den benachbarten Gewebelagen (3, 4, 5) zumindest bereichsweise Luftpolster (10) vorgesehen sind,
c) die Gewebelagen (3, 4, 5) aus einem nicht brennbaren Gewebematerial mit einer Anwendungstemperatur von bis zu 1200°C und mit einer Zersetzungstemperatur von über 1600°C bestehen, und
d) das Gewebematerial Silikat, Siliziumcarbid oder Asbest ist.

2. Laserschutzvorrichtung nach Anspruch 1, **dadurch gekennzeichnet, dass** das Gewebematerial faserförmig, ist.

3. Laserschutzvorrichtung nach Anspruch 1 oder 2, **dadurch gekennzeichnet, dass** das Gewebematerial mit Silikatfasern realisiert ist, die mit Glimmer ausgerüstet sind.

4. Laserschutzvorrichtung nach einem der vorhergehenden Ansprüche, **dadurch gekennzeichnet, dass** die Gewebelagen (3, 4, 5) jeweils aus dem gleichen Gewebematerial bestehen.

5. Laserschutzvorrichtung nach einem der vorhergehenden Ansprüche, **dadurch gekennzeichnet, dass** genau drei Gewebelagen (3, 4, 5) vorgesehen sind.

6. Laserschutzvorrichtung nach einem der vorhergehenden Ansprüche, **dadurch gekennzeichnet, dass** die Verbindungsstellen (8) punkt- oder linienförmig ausgebildet sind.

7. Laserschutzvorrichtung nach einem der vorhergehenden Ansprüche, **dadurch gekennzeichnet, dass** die Verbindungsstellen als Nahtlinien (8) ausgebildet sind, die insbesondere an seitlichen Rändern des Flächengebildes verlaufen.

8. Laserschutzvorrichtung nach Anspruch 7, **dadurch gekennzeichnet, dass** zur Bildung der Nahtlinien (8) ein nicht brennbarer Faden (9) vorgesehen ist.

9. Laserschutzvorrichtung nach einem der vorhergehenden Ansprüche, **dadurch gekennzeichnet, dass** der Gewebe-Mehrlagenaufbau (2) auf zumindest einer Außenseite mit einer optischen Filterschicht in Form einer lichtabsorbierenden Decklage (6, 7) versehen, insbesondere beschichtet, ist.

10. Laserschutzvorrichtung nach Anspruch 9, **dadurch gekennzeichnet, dass** die Decklage (6, 7) auf jeder der beiden Außenseiten des Gewebe-Mehrlagenaufbaus (2) vorgesehen ist.

11. Laserschutzvorrichtung nach Anspruch 9 oder 10, **dadurch gekennzeichnet, dass** die Decklage (6, 7) aus einem Decklagenmaterial auf Basis eines Kunststoffs, insbesondere eines Polyurethans, besteht.

12. Laserschutzvorrichtung nach einem der Ansprüche 9 bis 11, **dadurch gekennzeichnet, dass** die Decklage (6, 7) aus einem Decklagenmaterial besteht, dem Pigmente, insbesondere Ruß-Pigmente, zugemischt sind.

## Claims

1. Laser protection device in the form of a flexible composite structure comprising at least two fabric layers (3, 4, 5), wherein
a) the fabric layers (3, 4, 5) are arranged such as to be directly stacked one above the other so as to form a multilayer fabric structure (2);
b) adjacent fabric layers (3, 4, 5) are only partly joined to each other at joints (8) such that the adjacent fabric layers (3, 4, 5) loosely abut against each other outside the joints (8) and air cushions (10) are provided at least in some regions between the adjacent fabric layers (3, 4, 5);
c) the fabric layers (3, 4, 5) consist of a non-flammable fabric material having an application temperature of up to 1200°C and a decomposition temperature of more than 1600°C; and
d) the fabric material is silicate, silicon carbide or asbestos.

2. Laser protection device according to claim 1, **characterized in that** the fabric material is fibre-shaped.

3. Laser protection device according to claim 1 or 2, **characterized in that** the fabric material is formed of silicate fibres equipped with mica.

4. Laser protection device according to one of the preceding claims, **characterized in that** the fabric layers (3, 4, 5) consist of in each case the same fabric material.

5. Laser protection material according to one of the preceding claims, **characterized in that** exactly three fabric layers (3, 4, 5) are provided.

6. Laser protection device according to one of the preceding claims, **characterized in that** the joints (8) are point- or line-shaped.

7. Laser protection device according to one of the preceding claims, **characterized in that** the joints are configured as seams (8) running in particular along lateral edges of the composite structure.

8. Laser protection device according to claim 7, **characterized in that** a non-flammable yarn (9) is provided to form the seams (8).

9. Laser protection device according to one of the preceding claims, **characterized in that** at least an outer side of the multilayer fabric structure (2) is provided, in particular coated, with an optical filter layer in the form of a light-absorbing cover layer (6, 7).

10. Laser protection device according to claim 9, **characterized in that** the cover layer (6, 7) is provided on each of the two outer sides of the multilayer fabric structure (2).

11. Laser protection device according to claim 9 or 10, **characterized in that** the cover layer (6, 7) consists of a cover layer material on the basis of a plastic material, in particular a polyurethane.

12. Laser protection device according to one of claims 9 to 11, **characterized in that** the cover layer (6, 7) consists of a cover layer material having pigments, in particular carbon black pigments, admixed thereto.

## Revendications

1. Dispositif de protection laser sous forme d'une feuille plane flexible comprenant au moins deux couches de tissu (3, 4, 5),
a) les couches de tissu (3, 4, 5) étant disposées empilées immédiatement les unes sur les autres et formant un ensemble multicouche de tissu (2),
b) des couches de tissu (3, 4, 5) voisines n'étant reliées entre elles que par endroits au niveau de points de liaison (8) de sorte que les couches de tissu (3, 4, 5) voisines se situent librement les unes par rapport aux autres en dehors des points de liaison (8) et des coussins d'air (10) étant prévus au moins par endroits entre les couches de tissu (3, 4, 5) voisines,
c) les couches de tissu (3, 4, 5) étant constituées d'un matériau tissé non inflammable avec une température d'utilisation allant jusqu'à 1200 °C et une température de décomposition supérieure à 1600 °C, et
d) le matériau tissé étant un silicate, un carbure de silicium ou de l'amiante.

2. Dispositif de protection laser selon la revendication 1, **caractérisé en ce que** le matériau tissé est sous forme de fibres.

3. Dispositif de protection laser selon les revendications 1 ou 2, **caractérisé en ce que** le matériau tissé est réalisé avec des fibres de silicate qui sont pourvues en un agent de brillance.

4. Dispositif de protection laser selon l'une des revendications précédentes, **caractérisé en ce que** les couches de tissu (3, 4, 5) sont, chacune, constituées du même matériau tissé.

5. Dispositif de protection laser selon l'une des revendications précédentes, **caractérisé en ce qu'**exactement trois couches de tissu (3, 4, 5) sont prévues.

6. Dispositif de protection laser selon l'une des revendications précédentes, **caractérisé en ce que** les points de liaison (8) sont conçus sous forme de points ou de lignes.

7. Dispositif de protection laser selon l'une des revendications précédentes, **caractérisé en ce que** les points de liaison sont conçus sous forme de ligne de couture qui s'étendent notamment sur les bords latéraux de la feuille plane.

8. Dispositif de protection laser selon la revendication 7, **caractérisé en ce qu'**un fil (9) non inflammable est prévu pour la formation des lignes de couture (8).

9. Dispositif de protection laser selon l'une des revendications précédentes, **caractérisé en ce que** l'ensemble multicouche de tissu (2) est muni, notamment, est revêtu, au moins sur une face externe, d'une couche filtrante optique sous la forme d'une couche de revêtement (6, 7) absorbant la lumière.

10. Dispositif de protection laser selon la revendication 9, **caractérisé en ce que** la couche de revêtement (6, 7) est prévue sur chacune des deux faces externes de l'ensemble multicouche de tissu (2).

11. Dispositif de protection laser selon les revendications 9 ou 10, **caractérisé en ce que** la couche de revêtement (6, 7) est constituée d'un matériau de revêtement en couches à base d'une matière synthétique, notamment, d'un polyuréthane.

12. Dispositif de protection laser selon l'une des revendications 9 à 11, **caractérisé en ce que** la couche de revêtement (6, 7) est constituée d'un matériau de revêtement en couches, auquel sont mélangés des pigments, notamment, des pigments de suie.
